**Europäisches Patentamt**

**European Patent Office**

**Office européen des brevets**

(19)

(11) Veröffentlichungsnummer: **0 458 242 A1**

# (12) EUROPÄISCHE PATENTANMELDUNG

(21) Anmeldenummer: 91108143.8

(22) Anmeldetag: 21.05.91

(51) Int. Cl.⁵: **B29C 63/04**, B27D 5/00

(30) Priorität: 23.05.90 IT 2040290
24.04.91 IT 113291

(43) Veröffentlichungstag der Anmeldung:
**27.11.91 Patentblatt 91/48**

(84) Benannte Vertragsstaaten:
**AT BE CH DE DK ES FR GB GR IT LI NL SE**

(71) Anmelder: **G. STEFANI S.p.A.**
**Zona Industriale**
**I-36016 Thiene(IT)**

(72) Erfinder: **Carollo, Giannivo**
**Via Vignaletti 24**
**Zugliano(IT)**

(74) Vertreter: **Mayer, Hans Benno, Dipl.-Ing.**
**de Dominicis & Mayer S.r.l. Piazzale**
**Marengo, 6**
**I-20121 Milano(IT)**

(54) **Verfahren und Maschine zur Herstellung eines plattenförmigen Bauteils mit einer Postforming-Kante, sowie mit diesem Verfahren erzeugte Platte.**

(57) Verfahren zum Herstellen eines plattenfoermigen Werkstuecks mit einer Postforming-Kante und mit diesem verfahren hergestellte Platte, wobei vorgesehen ist, dass eine beschichtete Platte durch spanabhebenden Materialabtrag mit einer Aushoehlung versehen wird, das Beschichtungsmaterial auf einer Seite freigelegt wird und gleichzeitig auf der gegenueberliegenden Plattenseite ein keilfoermiges Materialstueck erzeugt wird, und das keilfoermig ausgebildete Materialstueck zum Koerper der Platte hin abgebogen wird, um an der Platte angeleimt zu werden, und die Platte anschliessend einem Besaeumvorgang unterzogen wird und im Anschluss daran mit dem vorher freigelegten Beschichtungsmaterial, unter Anwendung der Postforming-Technik, ummantelt wird, sowie Maschine zum Herstellen der ummantelten Kante des plattenfoermigen Werkstuecks, unter Verwendung des Beschichtungsmaterials, das vorher auf die Flaechen der Platte aufgebracht wurde, um ohne Unterbrechung eine Postforming-Kante oder eine Softforming-Kante herzustellen, unter Vorsehung einer Besaeumeinrichtung, gefolgt von einer Fraesvorrichtung, der eine Einritzvorrichtung, eine Praezisionsfraeseinrichtung, sowie eine Vorrichtung zum Profilfraesen folgt, mit einer Saegevorrichtung, gefolgt von einer weiteren Fraesvorrichtung, gefolgt von einer zusaetzlichen Einritzvorrichtung und einer Leimauftragsvorrichtung, sowie einer Biege- und Presseinrichtung und schliesslich einer Besaeumvorrichtung.

FIG. 2

EP 0 458 242 A1

Die vorstehende Erfindung betrifft ein Verfahren zur Herstellung eines plattenfoermigen Werkstuecks mit einer sogenannten Postforming-Kante. Die Erfindung betrifft des weiteren eine mit diesem Verfahren hergestellte Platte. Die vorstehende Erfindung betrifft auch eine Maschine zum Ummanteln der Kanten plattenfoermiger Werkstuecke, die zur Herstellung von Moebeln Verwendung finden und bei der fuer die Ummantelung der Kante das Beschichtungsmaterial einer Flaeche des plattenfoermigen Werkstuecks Verwendung findet. Es ist aus dem Stand Technik bekannt, Spanplatten fuer die Moebelindustrie auf beiden Flaechen mit einer Beschichtung zu versehen, z.B. mit natuerlichem Holzfurnier.

Haeufig besteht die Veredelungsschicht fuer plattenfoermige Werkstuecke aus kuenstlich hergestelltem Material, z.B. einer Melaminbeschichtung oder einem thermoplastischen Kunststoff.

Diese Kunststoffbeschichtungen werden auf die Flaechen der Traegerplatte unter Zuhilfenahme von grossen Pressen aufgeleimt.

Sofern es erwuenscht ist, den Kanten der Platte abgerundete Laengsprofilierungen zu verleihen, um z.B. abgerundete Kanten, unter Zuhilfenahme der sogenannten Postforming-Technik zu erstellen, ist es erforderlich, das in der Presse aufgebrachte Beschichtungsmaterial zur Herstellung einer Postforming-Kante um einige Zentimeter von der Oberflaeche der in der Presse beschichteten Traegerplatte abstehen zu lassen.

Geht man davon aus, dass das in den Plattenpressen aufgebrachte Beschichtungsmaterial sehr duenn ausgefuehrt werden muss und zudem noch sehr sproede ist, so wird verstaendlich, dass die Notwendigkeit, von der aus der Presse auslaufenden Platte einen nicht geschuetzten Streifen des Beschichtungsmaterials abstehen zu lassen, zu wesentlichen Schwierigkeiten, sei es waehrend des Transports, sei es waehrend der Einlagerung der Platte, fuehrt.

Um diese Nachteile zu vermeiden, ist es aus dem Stand der Technik bekannt geworden, ein Verfahren einzusetzen, bei dem der Plattenkoerper auf beiden Flaechen mit einem Laminat beschichtet wird, das nicht ueber den Umfang der Platte ragt.

Wird eine derartig beschichtete Platte, im Nachgang an eine Aufteilsaege, einer Kantenbearbeitungsmaschine zugefuehrt, und soll an dieser Platte eine Kante mittels Postforming-Verfahren hergestellt werden, so wird bei dem bekannten Verfahren mittels Spanabnahme die duenne Beschichtung einer Plattenflaeche freigelegt. Gleichzeitig wird entlang der herzustellenden Kante der Platte ein stufenfoermiger Anschlag gebildet, der eine Ausnehmung begrenzt, in die anschliessend eine vorprofilierte Leiste eingeleimt wird, z.B. eine Leiste aus sogenanntem "medium density" Material. Nach Einleimen dieser profilierten Leiste, die bereits eine abgerundete Kante aufweist, wird das vorher durch Spanabnahme freigelegte Beschichtungsmaterial der Platte erwaermt und um die profilierte Kante gebogen, um anschliessend an der Kante der so vorbereiteten Platte angeleimt zu werden.

Das bekannte Verfahren hat den Nachteil, dass neben der Vorbereitung der Plattenkante auch eine Fuelleiste an die vorbereitete Kante anzuleimen ist, wobei die anzuleimende Leiste auf einer separaten Maschine herzustellen ist. Diese Tatsache fuehrt zu einem erheblichen Anstieg der Kosten fuer die Erstellung einer Postforming-Kante an einem beschichteten, plattenfoermigen Werkstueck.

Des weiteren ist es notwendig, in der eingesetzten Kantenanleimmaschine eine zusaetzliche Vorrichtung zum Einfuehren der zusaetzlichen Fuelleiste vorzusehen. Da die Fuelleiste aus anderem Material als die Spanplatte besteht, ist die Leiste als Fremdkoerper anzusehen, die bei Feuchtigkeitsaufnahme der fertig bearbeiteten Platte zu unterschiedlichem hygroskopischem Verhalten gegenueber dem Plattenmaterial fuehrt. Es besteht somit die Gefahr, dass eine unregelmaessige Kante hergestellt wird, die Maengel aufweist, die fuer das Fertigprodukt nicht akzeptierbar sind. Es ist vom Stand der Technik her auch bekanntgeworden, plattenfoermige Werkstuecke zur Herstellung von Moebeln, entlang ihrer Schmalseiten (Kanten) unter Zuhilfenahme von Streifen aus Kunststoff oder natuerlichem Furnier zu beschichten. Diese Streifen werden in Kantenanleimmaschinen an den Seitenflaechen des Werkstuecks angeleimt.

Die bekannten Kantenanleimmaschinen haben sich als vorteilhaft erwiesen, wenn ebene Kanten, die in einem Winkel von 90° gegenueber den Flaechen der Platte angeordnet sind, zu beschichten sind. Es haben sich aber erhebliche Nachteile und Schwierigkeiten beim Versuch eingestellt, diese Maschinen auch zum Ummanteln der Kanten mittels Postforming- oder Softforming-Verfahren einzusetzen und dafuer direkt das Beschichtungsmaterial zu verwenden, das vorher auf die Oberflaeche der Platte aufgebracht wurde.

Weitere Aufgabe der vorstehenden Erfindung ist es daher, ein Verfahren vorzuschlagen, mit dem es moeglich ist, die Nachteile des Standes der Technik zu vermeiden und die Moeglichkeit zu schaffen, Platten mit einer einwandfreien Postforming-Kante, unter Einsatz einfacher Verfahrensschritte herzustellen, besonders ohne die Notwendigkeit, ein zusaetzliches Bauteil in Form einer getrennt einzubringenden Fuelleiste vorzusehen.

Es ist auch Aufgabe der vorstehenden Erfindung, eine entsprechende Maschine vorzuschlagen, mit der es moeglich wird, ein auf den Flaechen bereits beschichtetes plattenfoermiges Werkstueck derartig zu bearbeiten, dass die Moeglichkeit geschaffen wird, das Beschichtungsmaterial einer Plattenflaeche ohne Unterbrechung auch zum kontinuierlichen Beschichten der zugeordneten Kante zu verwenden.

Erfindungsgemaess wird diese Aufgabe mit einem Verfahren geloest, das sich dadurch kennzeichnet, dass

a) die Kante der Platte mit wenigstens einer, sich in Laengsrichtung erstreckenden Profilfraesung versehen wird,

b) durch Spanabnahme von der Platte ein Freilegen einer Beschichtung der Platte erfolgt,

c) durch weitere Spanabnahme vom Plattenkoerper ein keilfoermiges Teilstueck freigelegt wird, das mit seiner Spitze ueber das Beschichtungsmaterial mit dem Plattenkoerper verbunden ist,

d) eine Beleimung der Begrenzungswaenden des in den Plattenkoerper eingearbeiteten Hohlraums erfolgt,

e) ein Abbiegen des keilfoermigen Teilstuecks zum Plattenkoerper und ein Anleimen desselben am Plattenkoerper erfolgt,

f) ein Besaeumen der so erstellten Plattenkante erfolgt und

g) ein Umbiegen des vorher freigelegten Beschichtungsmaterials um die profilierte Kante und ein Anleimen des Beschichtungsmaterials an der Kante erfolgt.

Mit einem Verfahren dieser Art werden verschiedene Vorteile erzielt.

Dank der Erstellung eines keilfoermigen Koerpers, der in einem vorangegangenen Arbeitsvorgang einer Profilierung zur Erstellung einer abgerundeten Postforming-Kante unterworfen wird, ist es nicht mehr erforderlich, eine zusaetzliche Fuelleiste einzubringen.

Durch Vorsehung der Spitze des keilfoermigen Teilstuecks in unmittelbarer Naehe der Beschichtung, die eine Flaeche der Platte abdeckt, bleibt das keilfoermige Teilstueck stets mit dem Plattenkoerper in Laengsrichtung verbunden und erlaubt in einem zweiten Arbeitsvorgang ein kontrolliertes Abbiegen des keilfoermigen Teilstuecks (aehnlich einer Filmscharnierverbindung) in Richtung des Plattenkoerpers, wodurch die Lage des keilfoermigen Teilstuecks gegenueber dem Plattenkoerper stets genau eingehalten wird.

Durch anschliessendes Besaeumen des so erstellten Postforming-Kante wird nicht nur die restliche Beschichtung vom keilfoermigen Teilstueck abgenommen, es erfolgt auch eine Bearbeitung der Kante in der Naehe des scharnierartig ausgebildeten Biegepunktes, um fuer die anschliessende Postforming-Ummantelung eine einwandfrei bearbeitete Flaeche zur Verfuegung zu stellen, die sich besonders durch homogenen Materialaufbau auszeichnet und es ermoeglicht, in einem automatischen Verfahren und ohne Bearbeitungsfehler, die freigelegte, von der Platte abstehende Beschichtung anzuleimen.

Die zur Durchfuehrung des Verfahrens geeignete Maschine weist eine Transporteinrichtung fuer den Vorschub der Platten entlang einer horizontalen Ebene auf und ist mit Bearbeitungs- und Behandlungsvorrichtungen in der folgenden Kombination ausgeruestet:

a) eine Besaeumeinrichtung,

b) eine Fraeseinrichtung,

c) eine Einritzvorrichtung,

d) eine Praezisionsfraeseinrichtung,

e) eine Profilfraeseinrichtung,

f) eine Einschneidevorrichtung,

g) eine Fraesvorrichtung,

h) eine Einritzvorrichtung,

i) eine Beleimvorrichtung,

k) eine Biege- und Anpressvorrichtung,

l) eine Besaeumvorrichtung.

Mit besonderem Vorteil ist zwischen der Vorrichtung zum Auftragen des Leims und einer mit Rollen bestueckten Anpressvorrichtung eine Geraeteschaft zur thermischen Beeinflussung der Leimschicht vorgesehen.

Mit einer derartig ausgebildeten Maschine und, ausgehend von einer auf beiden Seiten mit einer Beschichtung veredelten Spanplatte, z.B. mit einer Melaminharzbeschichtung, wird es moeglich, eine profilierte Kante, z.B. eine Softforming- oder Postforming-Kante herzustellen.

Man befreit die Schicht des Dekorationsmaterials einer Plattenflaeche vom Traegermaterial der Spanplatte und stellt im Anschluss eine Postforming- oder Softforming-Kante her, auf der das vorher freigelegte und vom Koerper der Spanplatte befreite Beschichtungsmaterial aufgeleimt wird.

Mit der erfindungsgemaessen Maschine wird also das aeusserst sproede und empfindliche Beschichtungsmaterial wenige Augenblicke vor der Erstellung der fertigen Kante von der Platte abgeloest.

Weitere Vorteile der Erfindung koennen der folgenden Beschreibung, den Zeichnungen sowie den Unteranspruechen entnommen werden.

Das Verfahren, die Masschine sowie die erfindungsgemaess ausgebildete Platte, werden nun genauer beschrieben und anhand eines Ausfuehrungsbeispiels in den Zeichnungen dargestellt.

Es zeigen:

Fig. 1 im Querschnitt das Endstueck eines plattenfoermigen Werkstuecks waehrend der Vorbereitung und spanabhebenden Bearbeitung;

Fig. 2 das vorbereitete plattenfoermige Werkstueck waehrend des Beleimvorganges;

Fig. 3 schematisch den Abbiegevorgang, mit dem das keilfoermige Werkstueck umgebogen und an der Plattenkante angeleimt wird;

Fig. 4 den Besaeumvorgang der Kanten,

Fig. 5 den Biegevorgang des Beschichtungsmaterials waehrend der Ummantelung der Kante mittels Postforming-Verfahren; und

Fig. 6 die fertige Platte mit einer oder mit zwei abgerundeten und im Postforming-Verfahren ummantelten Kante.

Fig. 7 in Ansicht das Einlaufteil der erfindungsgemaessen Maschine;

Fig. 8 das Mittelstueck der Maschine; und

Fig. 9 das Endstueck der erfindungsgemaessen Maschine.

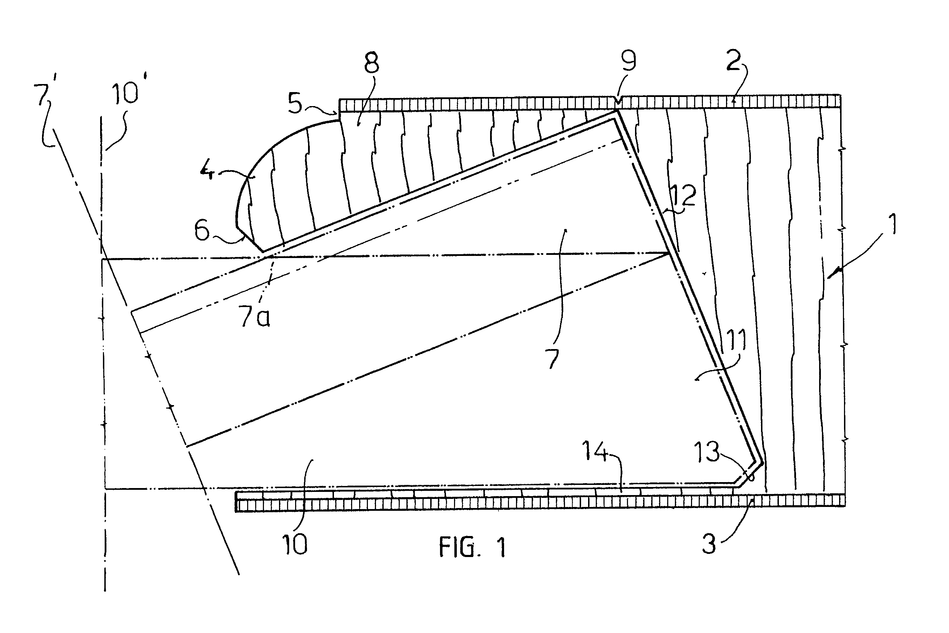

Wie der Fig. 1 zu entnehmen ist, wird fuer die Durchfuehrung des Verfahrens gemaess der vorstehenden Erfindung eine Spanplatte 1 eingesetzt, die auf beiden Seiten mit einer Beschichtung 2 und 3, z.B. einer Beschichtung aus Melaminharz oder einem anderen Kunststoffmaterial versehen ist.

Die Platte 1 kann auch mit natuerlichem Furnier beschichtet sein, in diesem Falle waere ein Holzfurnier zu verwenden, das eine Verformung mittels Postforming-Verfahren erlaubt. An der zu ummantelnden Kante der Platte wird durch einen ersten Arbeitsvorgang mittels Spanabnahme eine Profilierung 4, ein Absatz 5 sowie eine Abschraegung 6 erzeugt.

Im Anschluss daran unter Verwendung eines Werkzeuges 7, das um eine geneigte Achse 7 rotiert, wird eine Einfraesung hergestellt, die sich von der aeusseren Plattenseite bis zum Inneren des Plattenkoerpers 1 erstreckt.

Das Werkzeug 7 ist derartig angeordnet und ausgerichtet, das vom Plattenkoerper 1 ein keilfoermiges Keilstueck 8 freigelegt wird. Dabei ist die Keilspitze in unmittelbarer Naehe der Beschichtung 2 angeordnet. In Uebereinstimmung mit der Keilspitze 8 kann die Beschichtung 2 mit einer Einritzung 9 versehen werden, die sich ueber die gesamte Laenge der Platte 1 erstreckt.

Wenn es erwuenscht ist, die Schnittqualitaet weiter zu erhoehen, ist es moeglich, zwei getrennte Werkzeuge 7 und 7a (Fig. 1) zu verwenden. Es koennte auch vorteilhaft sein, die Anfasung 4 sowie den Fraesvorgang mit den Werkzeugen 7 und 7a in einem einzigen Bearbeitungsgang durchzufuehren, dabei waeren zusammengesetzte Werkzeuge oder in Reihenfolge angeordnete Fraesergruppen empfehlenswert.

Mit einem zweiten profilierten Werkzeug 10, das um eine Achse 10' angetrieben wird, wird durch Spanabnahme die Aushoehlung 11 zwischen dem Laminat 2 und dem Laminat 3 des Plattenkoerpers 1 vervollstaendigt. Wie der Fig. 1 zu entnehmen ist, wird diese Aushoehlung 11 von einer schraegen Ebene 12 begrenzt, die sich an der Unterseite mit einer geneigten Ebene schneidet, die in entgegengesetzter Richtung angeordnet ist und in unmittelbarer Naehe der Beschichtung 3 auslaeuft.

Wie besonders der Fig. 1 zu entnehmen ist, wird das Werkzeug 10 so eingestellt, dass eine duenn Schicht des Spanmaterials 14 auf der Innenseite des Laminats 3 verbleibt, dadurch kann der folgende Anleimvorgang verbessert werden. Am Ende der bisher beschriebenen Vorgaenge wird das keilfoermige Teilstueck 8 leicht angehoben und um die scharnierartige Zone 9 geschwenkt, wie dies durch den Pfeil f angedeutet ist, um somit ein einfacheres Einbringen der Beleimvorrichtung 15 zum Aufbringen des Leims 16 auf den die Aushoehlung 11 begrenzenden Flaechen zu ermoeglichen.

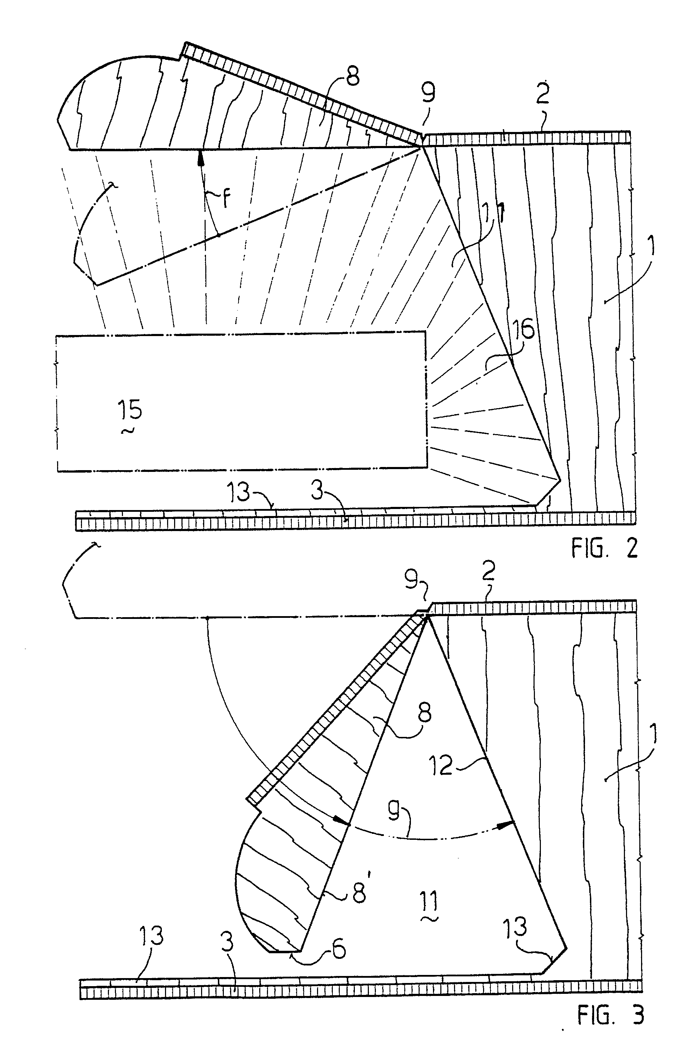

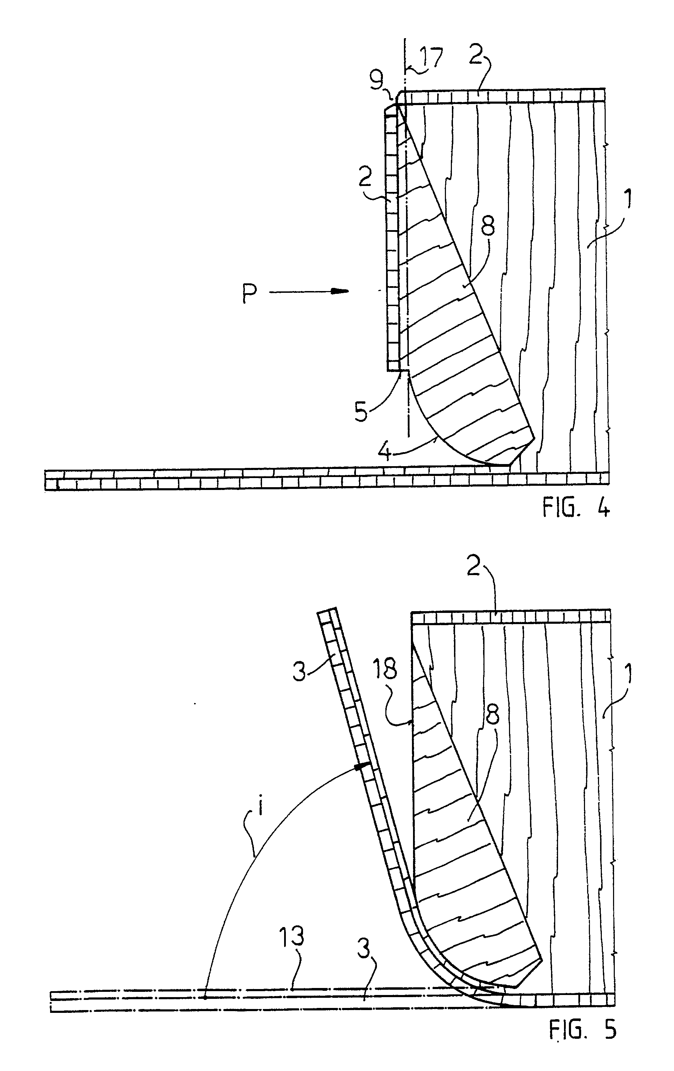

Der Fig. 2 kann entnommen werden, dass die Vorrichtung 15 zum Aufbringen der Leimschicht 16 so ausgebildet ist, dass kein Beleimen der unteren Seite des Laminats 3 erfolgt. Nach Aufbringen des Klebers wird das keilfoermige Teilstueck 8 in der mit dem Pfeil (g) angedeuteten Richtung abgebogen und die Anschraegung 6 wird mit der Anschraegung 13 sowie die Flaeche 8' des keilfoermigen Teilstuecks mit der Flaeche 12, die die Aushoehlung 11 zur Spanplatte 1 hin begrenzt, in Wirkverbindung gebracht. Durch Aufbringen eines Drucks P (Fig. 4) wird das keilfoermige Teilstueck 8 angepresst und an die Spanplatte 1 angeleimt.

Der Fig. 4 kann entnommen werden, dass zur Beseitigung des am keilfoermigen Teilstueck 8 verbleibenden Beschichtungsmaterial 2, sowie zum Ausgleich eventuell vorhandener Unebenheiten, die sich an der scharnierartigen Biegekante 9 gebildet haben, sowie zum Ebnen der Stufe 5 vor der profilierten Kante 4, die Platte 1 einem Besaeumvorgang unter Zuhilfenahme eines Saege- oder Fraeswerkzeugs 17 unterzogen wird.

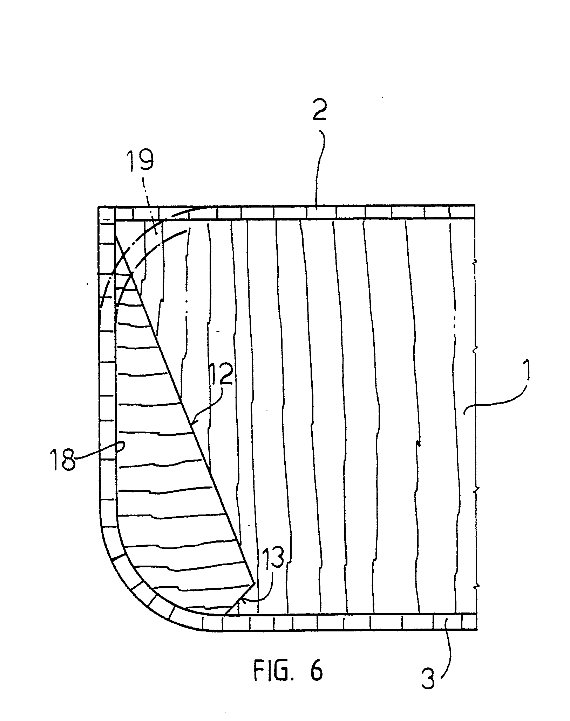

In einem letzten Bearbeitungsvorgang, wie in Fig. 5 dargestellt, wird die Kante 18 der Platte 1 nach Durchfuehrung des beschriebenen Vorbereitungsvorgangs, in ueblicher Weise mit einer Leimschicht versehen und im Anschluss daran wird die Kunststoffbeschichtung 3, falls erforderlich nach entsprechender Erwaermung, zusammen mit der duennen Spanschicht 14, in Richtung des Pfeils (i) auf die Kante 18 abgebogen, um an diese angeleimt zu werden. In bekannter Weise wird das verbleibende, abstehende Beschichtungsmaterial 3 besaeumt oder, wie in Fig. 6 schematisch dargestellt, zur Ummantelung einer weiteren gerundeten Kante 19, unter Einsatz des Postforming-Verfahrens herangezogen.

Zur Herstellung der abgerundeten Kante ist erfindungsgemaess keine zusaetzlich einzusetzende Fuelleiste in andersartigem Material vorzusehen. Es findet hingegen ein keilfoermiges Teilstueck Verwendung, das in vorteilhafter Weise direkt aus dem Material der Spanplatte herausgearbeitet und waehrend des gesamten Bearbeitungsvorgangs mit der Spanplatte einstueckig, ueber eine Art Scharnier, verbunden ist.

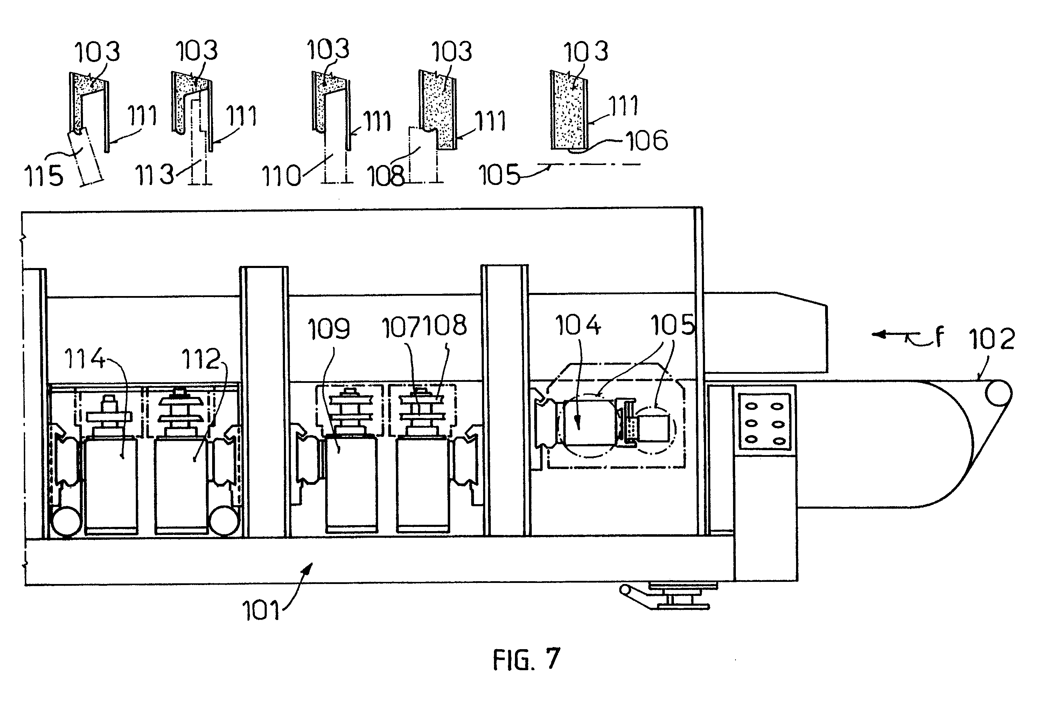

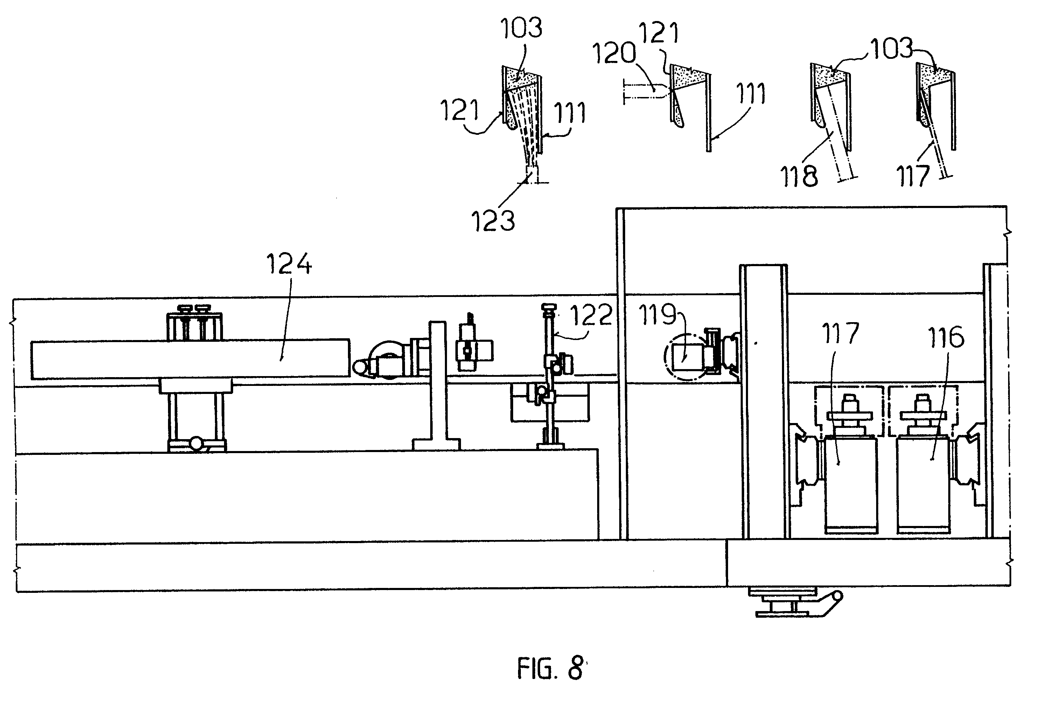

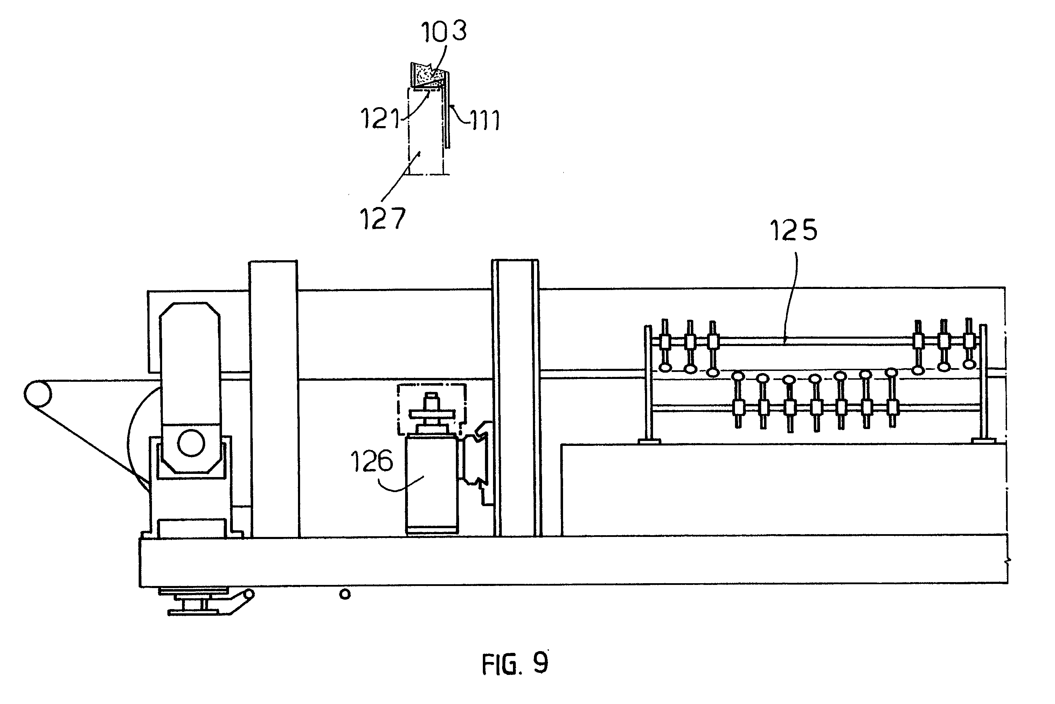

Das keilfoermige Teilstueck kann einwandfrei am Koerper der Spanplatte angeleimt werden, ohne dabei Gefahr zu laufen, dass sich Oeffnungen oder stufenfoermige Absaetze bilden. Mit einer spanabhebenden Bearbeitung (Fraeswerkzeug 17), wird die Spanplatte in einer Endbearbeitung von sich eventuell einstellenden Unregelmaessigkeiten, sowie von Laminatresten befreit. Im Anschluss daran wird es ermoeglicht, dass das Beschichtungsmaterial, das von einer Plattenseite freigelegt wurde, an der Kante angeleimt wird. In den Figuren 7, 8 und 9 sind in Ansicht die verschiedenen Teilbereiche der Maschine dargestellt, die in Wirklichkeit als zusammengefuegter einziger Maschinenkoerper anzusehen sind.

Die Maschine besteht aus einem Gestell 101, sowie einem endlosen Foerderband 102 wie diese aus herkoemmlichen Kantenanleimmaschinen bekannt sind.

Unter Zuhilfenahme des Foerderbands 102 werden die plattenfoermigen Werkstuecke in einer Horizontalebene durch die Maschine 101 gefoerdert und es wird die Voraussetzung geschaffen, dass die Kanten (schmalerer Seitenflaechen der Platte) durch mechanische Vorrichtungen einer Bearbeitung ausgesetzt werden koennen, wie dies noch genauer im Anschluss beschrieben wird.

Aus Gruenden der Einfachheit wurden in Fig. 7, 8 und 9 ueber den verschiedenen Bearbeitungsvorrichtungen auch ein Querschnitt der Platte 103 mit den im Einsatz befindlichen Bearbeitungswerkzeugen dargestellt, dies um die verschiedenen Bearbeitungsvorgaenge in der Maschine 101 besser verdeutlichen zu koennen.

Wenn die Platte 103 der Maschine 101 in Richtung des Pfeils (f) zugefuehrt wird, so wird die Kante der Platte 103 in einer ersten Bearbeitungsvorrichtung 104 mittels einer Kreissaege 105 besaeumt. Somit wird die Kante fuer die folgenden Bearbeitungsvorgaenge vorbereitet, da diese eine Platte 103 mit einer einwandfrei besaeumten Kante 106 benoetigen.

Unter Zuhilfenahme der anschiessenden Fraesvorrichtung 107 wird von der Spanplatte 103 unter Zuhilfenahme des Werkzeugs 108 ein Teilvolumen des Plattenkoerpers zerspant und ein profiliertes Teilstueck, entsprechend der spaeter herzustellenden Kante, erzeugt.

In der anschliessenden Bearbeitungsvorrichtung 109 wird, unter Zuhilfenahme eines Fraeswerkzeugs 110, eine Ausnehmung zwischen dem Plattenkoerper 103 und der Beschichtung 111, z.B. einer Melaminharzbeschichtung, geschaffen.

Um die Melaminharzbeschichtung 111 moeglichst weitgehend von verbleibendem Spanmaterial der Platte 103, sowie von verbleibenden Leimrestes zu befreien, erfolgt in der anschliessenden Bearbeitungseinrichtung, unter Zuhilfenahme eines saegenartigen Werkzeugs 113, ein Feinfraesen der inneren Flaeche des duennen Beschichtungsmaterials 111.

Unter Zuhilfenahme der folgenden Bearbeitungsvorrichtung 114, wird dem verbleibenden Koerper der Spanplatte 103 mit einem Fraeswerkzeug 115 ein geeignetes Profil fuer die folgenden Bearbeitungsvorgaenge verliehen.

In der naechsten Bearbeitungseinheit 116 wird unter Zuhilfenahme eines duennen Saegeblatts 117, z.B. eines Kreissaegeblattes, in das Profilstueck der Platte 103 ein verhaeltnismaessig duenner Einschnitt eingearbeitet und in der folgenden Bearbeitungseinheit 117, unter Zuhilfenahme eines Fraeswerkzeugs 118, wird das Kernstueck des Plattenkoerpers 103 das mit der vorangegangenen Bearbeitung unter Verwendung des Kreissaegeblatts 117 freigelegt wurde, entfernt.

Schliesslich, unter Verwendung der Vorrichtung 119 und dem Einsatz eines duennen Kreissaegeblattes 120, wird das Beschichtungsmaterial 121 eingeritzt, was zur Schaffung einer genau festgelegten Biegelinie fuehrt.

Der Einritzvorrichtung 119 folgt eine Beleimungsvorrichtung 122, in der, unter Verwendung einer Duese 123, auf die Kante des plattenfoermigen Werkstuecks 103, begrenzt von den Schichten 111 und 121, eine Leimschicht aufgetragen.

Es hat sich als vorteilhaft erwiesen, nach der Beleimvorrichtung 122 ein Heizelement 124 vorzusehen, das z.B. mit Infrarotlampen ausgeruestet ist, mit welchen die vorher, unter Verwendung der Vorrichtung 122, 123 aufgetragenen Leimschicht, auf die notwendige Verarbeitungstemperatur gebracht wird.

Nach dem Heizelement 124 ist in der Maschine eine mit Rollen 125 ausgeruestete Biege- und Anpressvorrichtung angeordnet. Die in ihrer Lage zum Werkstueck einstellbar vorgesehenen Rollen wirken auf das abstehende Teilstueck 121 ein und biegen das Teilstueck 121 auf die vorher mit einer Leimschicht versehene Kante 103 ab. Nach der mit Biege- und Pressrollen versehenen Vorrichtung 125 ist eine weitere Bearbeitungseinheit 126 vorgesehen, in der mittels Einsatz eines Fraeswerkzeugs 127, von der Kante der Spanplatte 103 die aus Melaminharz bestehender Beschichtung 121 abgetragen wird. Im Anschluss wird die Platte 103 mit entsprechend profilierter Kante mit einem frei abstehenden Beschichtungsstreifen aus Melaminharz einer Kantenanleimvorrichtung zugefuehrt, in der der Melaminharzstreifen 111 umgebogen und auf die profilierte Kante, die wie beschrieben hergestellt wurde, aufgeleimt.

Der Vorteil der erfindungsgemaessen Maschine 101 ist darin zu sehen, dass sie es ermoeglicht, die Kante einer Spanplatte 103 derartig vorzubereiten, dass der Beschichtungsstreifen 111 einer Oberflaeche der Platte 103 zum kontinuierlichen Ummanteln einer Postforming- oder Softforming-Kante herangezogen werden kann.

Mit besonderem Vorteil wird die sehr gleichmaessig und mit hoher Dichte ausgefuehrte Schicht der Spanplatte, das heisst die haerteste Schicht der Spanplatte, mit der Kante des plattenfoermigen Bauteils verbunden und dient in vorteilhafter Weise zur Aufnahme des Beschichtungsmaterials.

**Patentansprüche**

1. Verfahren zum Herstellen eines plattenfoermigen Werkstuecks zur Herstellung von Moebeln mit Postforming-Kanten, **dadurch gekennzeichnet,** dass
   a) die Kante der Platte mit wenigstens einer sich in Laengsrichtung erstreckenden Profilfraesung (4) versehen wird,
   b) durch Spanabnahme von der Platte (1) ein Freilegen einer Beschichtung (3) der Platte erfolgt,
   c) durch weitere Spanabnahme vom Plattenkoerper ein keilfoermiges Teilstueck (8) freigelegt wird, das mit seiner Spitze ueber das Beschichtungsmaterial (2) mit dem Plattenkoerper (1) verbunden ist,
   d) eine Beleimung der Begrenzungswaende des in den Plattenkoerper (1) eingearbeiteten Hohlraums erfolgt,
   e) ein Abbiegen des keilfoermigen Teilstuecks (8) zum Plattenkoerper (1) und ein Anleimen desselben am Plattenkoerper erfolgt,
   f) ein Besaeumen der so erstellten Plattenkante (2,5) erfolgt, und
   g) ein Umbiegen des vorher freigelegten Beschichtungsmaterials um die profilierte Kante und ein Anleimen des Beschichtungsmaterials an dieser Kante, erfolgt.

2. Verfahren, nach Patentanspruch 1, **dadurch gekennzeichnet,** dass zwischen der an der Plattenkante (1) angebrachten Profilierung (4) und der Beschichtung (2) eine Anschlagstufe (5) gebildet wird.

3. Verfahren, nach Patentanspruch 1, **dadurch gekennzeichnet,** dass das Beschichtungsmaterial (2) in Laengsrichtung in der Naehe der Keilspitze (8) eingeritzt (9) wird.

4. Verfahren, nach Patentanspruch 1, **dadurch gekennzeichnet,** dass die Flaechen (12, 13), die den Hohlraum (11) begrenzen, von einer ersten geneigten Ebene (12) begrenzt sind, die mit einer Ebene (13) zusammenlaeuft, die sich in entgegengesetzter Richtung erstreckt, und dass mit den zwei Ebenen (12, 13) die inneren Flaechen des keilfoermigen Teilstueck (8), nach Durchfuehrung des Biegevorganges, in Verbindung treten.

5. Verfahren, nach Patentanspruch 1, **dadurch gekennzeichnet,** dass die Herstellung der profilierten Kante (4), sowie die Spanabnahme zum Freilegen der Beschichtung (3) vom Plattenkoerper in einem einzigen Arbeitsgang erfolgen.

6. Verfahren, nach Patentanspruch 1, **dadurch gekennzeichnet,** dass die Herstellung des keilfoermigen Teilstuecks (8) unter Verwendung von zwei zusammengesetzten Fraeswerkzeugen erfolgt.

7. Platte zur Herstellung von Moebelteilen mit Postforming-Kante, hergestellt nach dem Verfahren gemaess Anspruch 1.

8. Platte fuer die Herstellung von Moebeln mit Postforming-Kante, nach Patentanspruch 7, **dadurch gekennzeichnet,** dass das keilfoermige Teilstueck (8) aus dem Plattenkoerper herausgearbeitet wird und aus dem Material des Plattenkoerpers (1) besteht.

9. Platte, nach Patentanspruch 7, **dadurch gekennzeichnet,** dass das keilfoermige Teilstueck (8) waehrend der spanabhebenden Bearbeitung des Plattenkoepers (1) permanent mit diesem verbunden ist.

10. Maschine, zum Herstellen einer beschichteten Kante eines plattenfoermigen Werkstuecks, unter Verwendung des auf der Plattenoberflaeche aufgetragenen Beschichtungsmaterials, mit einem Endlosfoerdermittel zum Vorwaertsbewegen der Platte in einer horizontal angeordneten Ebene nach Patentanspruch 1, **dadurch gekennzeichnet,** dass entlang der Vorschubebene der Platte in Kombination Einrichtungen zum Bearbeiten der Platte vorgesehen sind, bestehend aus:
    a) einer Besaeumvorrichtung (104, 105);
    b) einer Fraesvorrichtung (107, 108);
    c) einer Einritzvorrichtung (109, 110);
    d) einer Praezisionsfraesvorrichtung (112, 113);
    e) einer Profilfraeseinrichtung (114, 115);
    f) einer Einritzvorrichtung (116, 117);
    g) einer Fraesvorrichtung (117, 118);
    h) einer Einritzvorrichtung (119, 120);

i) einer Beleimvorrichtung (122, 123);

k) einer Biege- und Anpressvorrichtung (125);

l) einer Besaeumvorrichtung (126, 127).

11. Maschine nach Patentanspruch 10, **dadurch gekennzeichnet**, dass zwischen der Bearbeitungsvorrichtung (122, 123) zum Aufbringen eines Klebers und der mit Rollen ausgeruesteten Anpressvorrichtung (125) eine Einrichtung zum thermischen Behandeln der Leimschicht vorgesehen ist.

12. Maschinen, nach Patentanspruch 10, **dadurch gekennzeichnet,** dass die Maschine einer Kantenanleimvorrichtung zum Herstellen von Postforming- oder Softforming-Kanten vorgeschaltet ist.

FIG. 1

FIG. 2

FIG. 3

FIG. 4

FIG. 5

FIG. 6

FIG. 7

FIG. 8

EP 0 458 242 A1

FIG. 9

| | | Europäisches Patentamt | | EUROPÄISCHER RECHERCHENBERICHT | Nummer der Anmeldung |
|---|---|---|---|---|---|

**Nummer der Anmeldung**

**EP 91 10 8143**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 192 895 (FIRMA BÖTTCHER & GESSNER)<br>* Das ganze Dokument * | 1-11 | B 29 C 63/04<br>B 27 D 5/00 |
| A | DE-A-1 561 543 (PHILIPS)<br>* Seite 4, Zeile 11 - Seite 5, Zeile 3; Abbildungen 1-3 * | 1,4,7-9 | |
| A | CH-A-5 650 25 (GEORG FISCHER AG BRUGG)<br>* Spalte 2, Zeile 11 - Zeile 36; Abbildungen 1-3 * | 1,7,10 | |
| A | CH-A-4 223 04 (TEPAR AG)<br>* Seite 2, rechte Spalte, Zeile 118 - Seite 3, linke Spalte, Zeile 59; Abbildungen 3-7 * | 1,7 | |
| A | DE-A-3 041 870 (WILHELM LEHBRINK GMBH)<br>* Seite 7, Zeile 30 - Seite 8, Zeile 24; Abbildung 2 * | 1-3 | |
| A | FR-A-1 530 769 (TECORA)<br>* Seite 1, rechte Spalte, Zeile 9 - Zeile 35; Abbildungen * | 1 | |
| A | DE-A-2 357 051 (IMA-KLESSMANN KG)<br>* Seite 10, Zeile 17 - Seite 12, Zeile 23; Abbildungen 1-7 * | 1 | |

**RECHERCHIERTE SACHGEBIETE (Int. Cl.5)**

B 29 C
B 27 D
B 27 G
B 27 M
B 27 F
B 31 F

Der vorliegende Recherchenbericht wurde für alle Patentansprüche erstellt

| Recherchenort | Abschlußdatum der Recherche | Prüfer |
|---|---|---|
| Den Haag | 10 September 91 | TOPALIDIS A. |